# FASCICULE DE BREVET EUROPEEN

(11) **EP 4 082 232 B1**
(45) Date de publication et mention de la délivrance du brevet: **14.08.2024**
(21) Numéro de dépôt: 20845789.5
(22) Date de dépôt: 18.12.2020
(51) Int. Cl.: H04W 60/00, H04L 41/0853, H04L 41/0894, H04W 48/18, H04W 8/18, H04W 8/06, H04W 88/06

(54) **PROCÉDÉ DE CONFIGURATION D'UN EQUIPEMENT UTILISATEUR, EQUIPEMENT UTILISATEUR, ENTITE DE GESTION DE REGLES, PROCÉDÉ DE GESTION DE RÈGLES ET SYSTÈME**
VERFAHREN ZUR KONFIGURATION EINER BENUTZERVORRICHTUNG, BENUTZERGERÄT, REGELVERWALTUNGSENTITÄT, VERFAHREN ZUR REGELVERRWALTUNG UND SYSTEM
METHOD FOR CONFIGURING A USER DEVICE, USER DEVICE, RULE MANAGEMENT ENTITY, METHOD FOR RULE MANAGEMENT AND SYSTEM

(30) Priorité: 23.12.2019 FR 1915479
(43) Date de publication de la demande: 02.11.2022
(73) Titulaire: Orange, 92130 Issy-les-Moulineaux (FR)
(72) Inventeur: MASSON, Pierre-Alexandre, 92326 CHÂTILLON CEDEX (FR); CHEN, Xiaobao, 92326 CHÂTILLON CEDEX (FR); MOUQUET, Antoine, 92326 CHÂTILLON CEDEX (FR); DERVAL, Kevin, 92326 CHÂTILLON CEDEX (FR)
(86) Numéro de dépôt international: PCT/FR2020/052525
(87) Numéro de publication internationale: WO 2021/130440

(56) Documents cités:
- WO-A1-2018/141148
- WO-A1-2018/220291
- MEDIATEK INC ET AL: "On the need for network-based coordination", vol. SA WG2, no. Reno, NV, US; 20191118 - 20191122, 14 November 2019 (2019-11-14), XP051825337, Retrieved from the Internet <URL:https://ftp.3gpp.org/tsg_sa/WG2_Arch/TSGS2_136_Reno/Docs/S2-1911938.zip S2-1911938 was S2-1911529.doc> [retrieved on 20191114]
- "3rd Generation Partnership Project; Technical Specification Group Services and System Aspects; Study on system enablers for devices having multiple Universal Subscriber Identity Modules (USIM) (Release 17)", vol. SA WG2, no. V0.2.0, 6 December 2019 (2019-12-06), pages 1 - 19, XP051840713, Retrieved from the Internet <URL:ftp://ftp.3gpp.org/Specs/archive/23_series/23.761/23761-020.zip 23761-020_rm.doc> [retrieved on 20191206]

## Description

### Technique antérieure

La présente invention se situe dans le domaine des télécommunications.

Elle concerne plus particulièrement les architectures de réseaux de télécommunications mettant en oeuvre une technique de découpage de réseaux en tranches, plus communément appelée « network slicing » en anglais.

L'invention s'applique de façon privilégiée aux réseaux de télécommunications mobiles.

L'architecture des réseaux de télécommunications mobiles actuellement déployés ou en cours de déploiement est définie par le groupe de standardisation connu sous le nom de 3GPP (Third Génération Partnership Project). C'est le cas notamment des réseaux mobiles dits de deuxième génération (« 2G ou GSM»), de troisième génération (« 3G »), et de quatrième génération (« 4G »).

Jusqu'à la quatrième génération, les architectures de réseau définies par le groupe 3GPP reposent le plus souvent sur des équipements spécifiques, dédiés à des fonctionnalités précises, que ce soit au niveau du réseau d'accès ou du coeur de réseau, notamment en ce qui concerne la transmission de paquets depuis ou à destination d'un terminal mobile.

Le manque de flexibilité et d'évolutivité inhérent à ce type d'architecture a conduit le groupe 3GPP à envisager l'adoption d'architectures plus flexibles pour la prochaine génération de réseaux mobiles dite « 5G », afin de pouvoir répondre rapidement à des demandes extrêmement diverses en termes de trafic et/ou de qualité de service envisagées par les réseaux 5G. Il est à noter que les réseaux 5G ont vocation à concerner aussi bien les réseaux mobiles que les réseaux fixes.

Parmi les solutions envisagées, une des solutions les plus prometteuses repose sur une technique de découpage par tranches du réseau ou « network slicing ». Cette technique est décrite notamment dans la spécification technique 3GPP TS 23.501 v15.7.0, septembre 2019. Elle permet à l'opérateur d'un réseau de créer des réseaux logiques de bout-en-bout sur mesure et indépendants pour ses clients, à partir d'une même infrastructure de réseau physique, capables de fournir des solutions optimisées pour des scénarii variés correspondant à des contraintes diverses en termes de fonctionnalités, de performances et de qualités de service.

Plus spécifiquement, le concept de tranches de réseau permet de créer plusieurs instances de réseau aussi appelées « network slices » en anglais. Une tranche de réseau est composée de fonctions réseaux, de ressources matérielles (par exemple de stockage et de calcul) et de configurations permettant de satisfaire les exigences liées aux services, aux clients et/ou terminaux rattachés à cette tranche.

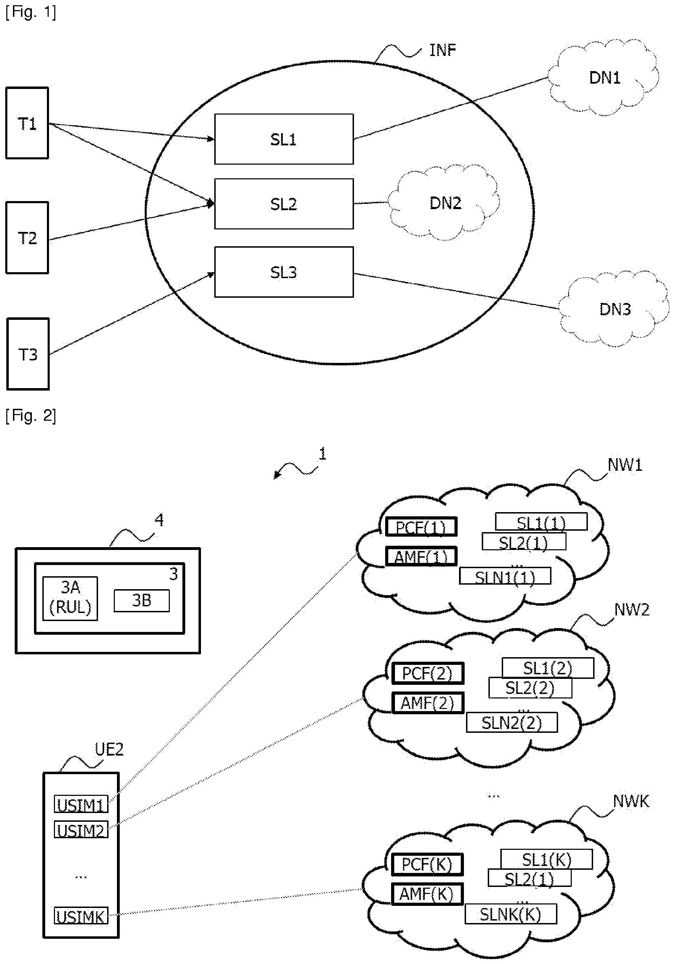

A titre illustratif, la **figure 1** représente une vue simplifiée d'une infrastructure de communications INF comprenant des tranches de réseau SL1, SL2 et SL3 représentant chacune un réseau mobile, les tranches de réseau SL1, SL2 et SL3 se partageant des fonctions mises en oeuvre dans des centres de données (ou « data centers » en anglais), telles que par exemple des fonctions de routage, d'adressage, de contrôle de flux de données, de nommage, etc. Dans l'exemple de la figure 1, les tranches de réseau SL1, SL2 et SL3 donnent accès à trois réseaux de données distincts DN1, DN2 et DN3. On note toutefois que des tranches de réseau peuvent donner accès à un même réseau de données. Chaque tranche de réseau peut être apparentée à un réseau mobile distinct, et est déterminée par les caractéristiques des flux de données transitant par cette tranche de réseau, qui présentent des points communs en termes par exemple de destination, d'acheminement, et de contraintes de sécurité, justifiant une gestion commune au sein d'une même tranche de réseau. Chacune des tranches est ainsi optimisée pour les besoins d'un type de service et/ou d'un type de client et/ou de terminaux. Dans l'exemple illustré à la figure 1, le terminal T1 est connecté aux tranches de réseau SL1 et SL2, le terminal T2 est connecté à la tranche SL2, et le terminal T3 est connecté à la tranche SL3.

Les terminaux des utilisateurs des réseaux mobiles supportent par ailleurs aujourd'hui un nombre toujours plus important d'applications proposées par divers acteurs du monde des télécommunications (opérateurs de réseau, fournisseurs de services, constructeurs de terminaux, etc.). Chacune de ces applications peut avoir des besoins spécifiques en ce qui concerne l'acheminement des données qui lui sont attachées (en d'autres termes, qu'elle émet ou reçoit). Ces données sont véhiculées sur des tranches du réseau après duquel le terminal est enregistré ou associé, via par exemple un module USIM (Universal Subscriber Identity Module) embarqué dans le terminal. De façon connue, un module USIM désigne une application stockée dans une carte UICC (Universal Integrated Circuit Card), aussi couramment appelée carte SIM, permettant à un terminal de s'enregistrer de manière sécurisée sur un réseau et notamment sur un réseau cellulaire.

Il est donc recommandé de sélectionner, pour véhiculer les données émises et reçues par chaque application, une tranche du réseau adaptée à ses besoins. La spécification technique 3GPP TS 23.501 v15.7.0, septembre 2019, indique que le réseau peut fournir au terminal des règles lui permettant de sélectionner une tranche d'un réseau en fonction des services qu'il veut utiliser. Toutefois, cette spécification technique considère un terminal équipé d'une unique carte USIM lui permettant de s'enregistrer auprès d'un unique réseau. Ainsi, les règles fournies au terminal concernent implicitement les tranches d'un unique réseau auprès duquel le terminal peut s'enregistrer via sa carte USIM.

Or certains terminaux sont configurés pour recevoir deux cartes USIM (on parle de terminal « dual SIM »). Ces deux cartes USIM leur permettent de bénéficier simultanément ou non d'une connectivité offerte par exemple par deux infrastructures de réseaux distinctes gérées par des opérateurs différents, ou par une même infrastructure de réseau mais selon deux offres différentes, par exemple une « offre professionnelle » et une « offre personnelle », chaque offre pouvant être associée à des services spécifiques proposés par l'opérateur de l'infrastructure de réseau. Dans l'état actuel de la technique, l'utilisateur d'un terminal « dual SIM » peut, si son terminal le permet, configurer manuellement dans son terminal quelle carte USIM il souhaite utiliser en fonction du type de trafic émis et reçu par le terminal (voix, données ou messages SMS (Short Message Service)). Dès lors, tout le trafic de type voix émis ou reçu par le terminal utilise la carte USIM configurée manuellement par l'utilisateur pour le trafic de type voix, tout le trafic de type données émis ou reçu par le terminal utilise la carte USIM configurée manuellement par l'utilisateur pour le trafic de type données, tout le trafic de type SMS émis ou reçu par le terminal utilise la carte USIM configurée manuellement par l'utilisateur pour le trafic de type SMS, et ce, toutes applications installées sur le terminal confondues.

La spécification technique 3GPP TS 23.501 n'évoque pas comment gérer l'utilisation de ce type de terminaux « dual SIM », ou plus généralement « multi SIM » en combinaison avec une technique de découpage en tranches de réseau.

Le document WO 2018/141148 A1 décrit un procédé permettant à un équipement utilisateur (UE) bénéficiant d'une souscription multiple de communiquer sur un réseau. L'UE est un équipement multi-SIM capable de se connecter à différents réseaux mobiles, et peut également supporter des tranches de réseau multiples concurrentes par l'intermédiaire de ses SIM multiples.

Le document WO 2018/220291 A1 décrit un procédé de sélection, par un terminal utilisateur, d'un ensemble de fonctions d'une tranche de réseau pour l'acheminement de données relatives à une application installée sur le terminal utilisateur attaché à cette tranche de réseau.

### Exposé de l'invention

L'invention est définie par les revendications indépendantes 1, 6, 16, 18 et 19. L'invention remédie notamment à cet inconvénient en proposant un procédé de configuration d'un équipement utilisateur destiné à être utilisé par un utilisateur auquel est allouée une pluralité d'identifiants identifiant chacun de manière unique ledit utilisateur sur au moins un réseau de communications, ce procédé étant mis en oeuvre par l'équipement utilisateur et comprenant, pour au moins une application :
- une étape d'obtention d'au moins une règle associant à au moins un flux de ladite application, au moins une tranche dudit au moins un réseau de communications pour un acheminement de données relatives audit au moins un flux et une information reliant ladite tranche à un identifiant parmi ladite pluralité d'identifiants de l'utilisateur ; et
- une étape de configuration de l'équipement utilisateur avec ladite au moins une règle pour qu'il exécute ladite au moins une règle lors d'un accès à ladite application.

Corrélativement, l'invention vise aussi un équipement utilisateur destiné à être utilisé par un utilisateur auquel est allouée une pluralité d'identifiants identifiant chacun de manière unique l'utilisateur sur au moins un réseau de communications, cet équipement utilisateur comprenant :
- un module d'obtention, configuré pour obtenir au moins une règle associant à au moins un flux d'une application, au moins une tranche dudit au moins un réseau de communications pour un acheminement de données relatives audit au moins un flux et une information reliant ladite tranche à un identifiant parmi ladite pluralité d'identifiants de l'utilisateur ; et
- un module d'exécution, configuré pour exécuter ladite au moins une règle lors d'un accès à l'application.

Par application, on entend ici tout type de programme ou de logiciel, destiné à être installé sur un équipement pour réaliser une tâche, ou un ensemble de tâches élémentaires qui s'exécute en utilisant le système d'exploitation et les ressources matérielles de l'équipement. Il peut s'agir par exemple d'un jeu électronique, d'un navigateur web, d'un lecteur multimédia, d'une application de commerce en ligne, de transmission de données de santé, etc. On note que l'invention s'applique aussi bien lorsque l'application est installée sur l'équipement utilisateur ou sur un autre équipement accessible par l'équipement utilisateur (par exemple sur un serveur distant, etc.).

Aucune limitation n'est attachée à la nature de l'équipement utilisateur (ou UE pour « User Equipment » en anglais) auquel s'applique l'invention. Il peut s'agir d'un terminal tel qu'un téléphone intelligent (ou « smartphone »), un ordinateur portable, une tablette numérique, un objet connecté, mais également un routeur, etc. Par ailleurs, les différents modules de l'équipement utilisateur peuvent être hébergés par des entités physiques différentes.

On note que l'invention est décrite, eu égard au problème technique évoqué précédemment, en référence à un équipement utilisateur « dual SIM » ou « multi SIM » ; toutefois elle s'applique de manière plus générale à tout équipement utilisateur destiné à être utilisé par un utilisateur auquel est allouée une pluralité d'identifiants distincts l'identifiant chacun de manière unique sur au moins un réseau de communications. De tels identifiants sont par exemple des identifiants de type IMSI (International Mobile Subscriber Identifier) utilisés notamment dans les réseaux 4G ou de type SU-PI (SUbscription Permanent Identifier) utilisés notamment dans les réseaux 5G, ou encore de type adresse MAC (Medium Access Control) pour des réseaux non-3GPP de type WLAN (Wireless Access Network). Ce sont des identifiants qui sont alloués à l'utilisateur de façon indépendante les uns des autres et de façon permanente : en d'autres termes, ils sont invariants tant que l'utilisateur bénéficie d'un abonnement ou d'une souscription auprès d'un réseau. Ces identifiants peuvent être stockés respectivement, dans un mode particulier de réalisation, dans une pluralité de modules USIM embarqués et/ou de cartes réseaux dans l'équipement utilisateur.

Ainsi, dans un mode particulier de réalisation, l'invention concerne également un équipement utilisateur configuré pour recevoir une pluralité de modules USIM et/ou de cartes réseau, chaque carte ou chaque module étant associé(e) à un identifiant distinct de la pluralité d'identifiants alloués à l'utilisateur.

Cette pluralité d'identifiants identifient l'utilisateur et lui permettent de s'enregistrer via son équipement utilisateur auprès d'une pluralité de réseaux distincts (par exemple auprès de réseaux mobiles terrestres publics ou PLMN (pour Public Land Mobile Network) différents), ou auprès d'un même réseau mais en bénéficiant d'offres ou d'abonnements indépendant(e)s, associé(e)s chacun(e) à un identifiant de l'utilisateur différent (par exemple un « abonnement professionnel » et un « abonnement personnel » proposés par le même opérateur de réseau et s'appuyant sur la même infrastructure de réseau). Du point de vue des réseaux, ces identifiants sont gérés comme s'ils étaient alloués respectivement à autant d'utilisateurs différents.

L'invention propose de configurer (par exemple, automatiquement) un équipement d'un utilisateur disposant d'une pluralité d'identifiants permettant à l'équipement utilisateur d'accéder à un ou plusieurs réseaux, avec une ou plusieurs règles allouant une ou plusieurs tranches de ce ou de ces réseaux à au moins un flux d'une application. Chaque règle comprend préférentiellement un identifiant de l'application à laquelle elle se rapporte. On note que les règles peuvent associer à tous les flux d'une même application les mêmes tranches du ou des réseaux auxquels l'équipement utilisateur peut accéder via la pluralité d'identifiants alloués à l'utilisateur. Toutefois l'invention offre également, si besoin, une granularité supplémentaire permettant de distinguer les tranches de réseau à utiliser en fonction de différents types de flux pouvant être émis ou reçus par une même application, voire individuellement de chaque flux pouvant être émis ou reçu par une même application. Différents types de flux ou différents flux peuvent correspondre par exemple à des flux transportant des données de natures différentes (données audio, vidéo, texte, etc.), à des flux ayant des adresses de destination différentes, une adresse IP distante différente, un port distant différent, etc. Par exemple, les critères de différentiation de flux listés dans la table 5.2.1 de la spécification 3GPP TS 24.526 intitulée « User Equipment (UE) policies for 5G System (5GS) ; Stage 3 », v16.1.0, septembre 2019 peuvent être considérés.

En d'autres termes, les règles transmises à l'équipement utilisateur pour sa configuration tiennent compte du fait que celui-ci bénéficie d'une connectivité multiple grâce aux multiples identifiants qui sont alloués à l'utilisateur. Elles sont avantageusement établies en tenant compte des caractéristiques des tranches de réseau associées au(x) différent(s) réseau(x) auprès duquel/desquels l'équipement utilisateur peut s'enregistrer et des services associés à ces tranches de réseau compte tenu des spécificités des applications considérées. On note que les règles fournies à l'équipement utilisateur peuvent concerner des applications qui ne sont pas installées sur ce dernier ou qui ne seront pas exécutées par ce dernier ; elles ne sont dans ce cas pas prises en compte par celui-ci, et peuvent être supprimées le cas échéant de sa configuration.

Dans une variante de réalisation, les règles obtenues par l'équipement utilisateur concernent des applications installées sur celui-ci.

Par exemple, l'équipement utilisateur peut fournir à une entité en charge d'établir les règles les identifiants des applications qu'il héberge, lors de son enregistrement auprès du réseau ou des réseaux sur le(s)quel(s) l'utilisateur dispose d'identifiants, ou à tout autre moment (ex. lors de l'installation d'une nouvelle application).

L'information associée explicitement dans chaque règle à chaque tranche de réseau conformément à l'invention permet avantageusement de désigner de manière univoque le réseau auquel la tranche est rattachée si les identifiants alloués à l'utilisateur correspondent à des réseaux différents, ou si les tranches sont rattachées à un même réseau, l'identifiant que l'équipement utilisateur doit utiliser pour accéder à cette tranche de réseau.

Dans un mode particulier de réalisation, cette information comprend pour une tranche d'un réseau de communications :
- ledit identifiant parmi ladite pluralité d'identifiants de l'utilisateur ;
- un identifiant d'un module dudit terminal contenant ledit identifiant ; ou
- un identifiant du réseau de communication pour lequel est alloué ledit identifiant audit utilisateur.

En d'autres termes, l'information associée à chaque tranche de réseau associée à un flux d'application contient soit une référence directe à l'identifiant de l'utilisateur à utiliser pour communiquer sur cette tranche de réseau, soit une référence indirecte à cet identifiant par le biais par exemple du module qui contient cet identifiant ou encore du réseau auquel il est rattaché (si les identifiants alloués à l'utilisateur l'identifie typiquement sur des réseaux différents). Dans l'exemple d'un équipement utilisateur multi-SIM, cette information permet ainsi de désigner la SIM auquel correspond la tranche en question et que l'équipement utilisateur doit utiliser pour le flux de l'application qui est associé à cette tranche.

Il résulte de l'invention qu'un équipement utilisateur multi-SIM peut ainsi recevoir des règles d'association entre applications (voire flux d'applications) et tranches de réseau pour chacune des modules USIM et/ou des cartes réseaux qu'il embarque. L'invention permet ainsi d'associer pour une application de l'équipement utilisateur, voire pour différents flux d'une même application de l'équipement utilisateur, un module USIM et une tranche du réseau correspondant. Les flux d'une même application peuvent donc être répartis sur différentes tranches de différents réseaux en fonction de la spécificité de chacun de ces flux : on ne se limite plus à une répartition statique en fonction d'un type de trafic échangé avec l'équipement utilisateur (voix, données, SMS). De la granularité offerte par l'invention découle une meilleure adaptation des caractéristiques du réseau aux spécificités de chaque application installée sur le terminal, une meilleure disponibilité des applications et des services offerts à l'utilisateur en découlant, et donc une expérience utilisateur améliorée par rapport à l'état de la technique.

Dans un mode particulier de réalisation, les règles obtenues par l'équipement utilisateur sont déterminées par une entité de gestion des règles. Cette entité de gestion des règles peut être située dans une passerelle de médiation entre les différents réseaux auprès desquels l'utilisateur est abonné ou si l'utilisateur est abonné auprès d'un seul réseau via des souscriptions différentes, dans ce réseau. En variante, elle n'est pas nécessairement associée aux réseaux et peut être une entité indépendante de ces derniers.

Ainsi, selon un autre aspect, l'invention vise également un procédé de gestion de règles, mis en oeuvre par une entité de gestion de règles, ce procédé comprenant, pour au moins un utilisateur auquel est allouée une pluralité d'identifiants identifiant respectivement ledit utilisateur de manière unique sur au moins un réseau de communications :
- une étape de détermination d'au moins une règle associant à au moins un flux d'une application, au moins une tranche dudit au moins un réseau de communications pour un acheminement de données relatives audit au moins un flux et une information reliant ladite tranche à un identifiant parmi ladite pluralité d'identifiants dudit utilisateur ; et
- une étape de transmission de ladite au moins une règle vers un l'équipement utilisateur de l'utilisateur.

Corrélativement, l'invention vise aussi une entité de gestion de règles comprenant :
- un module de détermination, configuré pour déterminer au moins une règle associant à au moins un flux d'une application, au moins une tranche d'au moins un réseau de communications pour un acheminement de données relatives audit au moins un flux et une information reliant ladite tranche à un identifiant parmi une pluralité d'identifiants alloués audit utilisateur et identifiant respectivement ledit utilisateur de manière unique sur ledit au moins un réseau de communications ; et
- un module de transmission configuré pour transmettre ladite au moins une règle vers un équipement utilisateur de l'utilisateur.

On note que selon le contexte considéré, la transmission de la règle vers l'équipement utilisateur peut se faire directement ou indirectement via une ou plusieurs entités des réseaux auprès desquels l'équipement utilisateur est abonné.

Par exemple, dans un mode particulier de réalisation, ladite au moins une règle est obtenue lors d'une association (ou d'un enregistrement ou d'un attachement) de l'équipement utilisateur audit au moins un réseau de communications.

De cette sorte, l'équipement utilisateur dispose automatiquement et sans délai des règles à appliquer pour accéder aux applications qu'il héberge ou auxquelles il est susceptible d'accéder. Ceci se fait de manière transparente pour l'utilisateur de l'équipement utilisateur.

En variante, les règles peuvent être configurées manuellement dans l'équipement utilisateur, par exemple par l'utilisateur de l'équipement utilisateur, via une interface utilisateur prévue à cet effet. Une telle interface est par exemple un menu de paramétrage disponible sur l'équipement utilisateur.

Selon une autre variante encore, les règles peuvent être configurées de manière statique dans le logiciel de l'équipement utilisateur.

Comme mentionné précédemment, les règles sont déterminées pour chaque application en tenant compte des différentes tranches de réseau et le cas échéant des différents réseaux disponibles. On note que préférentiellement, elles sont déterminées en tenant compte des caractéristiques et des souscriptions de chaque utilisateur, toutefois on peut envisager également, dans un mode particulier de réalisation, que les règles soient définies uniquement en fonction des spécificités des applications et que les mêmes règles soient envoyées à tous les utilisateurs, charge à eux ensuite de ne pas tenir compte des règles qui ne sont pas applicables. Elles peuvent par ailleurs tenir compte d'autres paramètres, comme par exemple des caractéristiques matérielles et/ou logicielles de l'équipement utilisateur.

Diverses configurations peuvent être envisagées pour chaque règle.

Ainsi, par exemple une même règle peut associer à un ou plusieurs flux d'une application une pluralité de tranches de réseau distinctes. Cette pluralité de tranches de réseau peut correspondre à un même réseau ou à des réseaux de communications distincts.

Dans ce mode de réalisation, l'application peut accéder simultanément aux différentes tranches de réseau identifiées par la règle, par exemple dans un souci de répartir la charge entre les différentes tranches de réseau.

En variante, une priorité d'utilisation peut être attribuée à chacune de ladite pluralité de tranches distinctes.

Si ces tranches sont rattachées à des réseaux distincts, cela permet à l'équipement utilisateur de déterminer quel réseau (par exemple, quel module USIM ou quelle carte réseau) il doit utiliser en premier lieu, et si celui-ci n'est pas accessible (par exemple parce que le module USIM ou la carte réseau correspondant(e) n'est pas activé(e) au sein de l'équipement utilisateur), une solution de repli.

Les priorités d'utilisation attribuées aux différentes tranches de réseau contenues dans une règle peuvent être attribuées, dans un mode particulier de réalisation, par l'entité de gestion des règles, par exemple de sorte à réaliser une répartition de charge sur les différentes tranches de réseau. En variante, d'autres critères peuvent être envisagés pour établir des priorités entre les tranches de réseau. Ces critères peuvent être liés à l'utilisateur plus particulièrement, par exemple en fonction de l'abonnement dont il dispose auprès du ou des réseaux concernés, ou de la couverture réseau dont il dispose, etc.

Les règles peuvent également contenir des instructions d'utilisation des tranches de réseau comprises dans les règles, comme par exemple dans une règle comprenant une pluralité de tranches de réseau distinctes, l'instruction de réaliser une répartition de la charge entre ces tranches de réseau distinctes, ou d'utiliser telle tranche de façon nominale et telle autre en secours, etc.

Par ailleurs, dans un mode particulier de réalisation, l'entité de gestion peut associer à chaque règle une priorité d'exécution de ladite règle.

Une telle priorité permet à l'équipement utilisateur, en cas de conflits entre deux règles déterminées pour deux applications différentes devant être exécutées simultanément (par exemple l'équipement utilisateur ne peut véhiculer de trafic qu'avec un réseau à un instant donné, et deux applications en cours d'exécution sont associées à des tranches de réseau appartenant à des réseaux distincts), de sélectionner la règle à appliquer en premier lieu. En variante, cette priorité peut être donnée à titre indicatif et l'équipement utilisateur peut décider d'agir autrement en cas de conflits.

Dans un mode particulier de réalisation de l'invention, le procédé de configuration et/ou le procédé de gestion de règles est mis en oeuvre par un ordinateur.

Dans un mode de réalisation non revendiqué, l'invention vise également un programme d'ordinateur sur un support d'enregistrement, ce programme étant susceptible d'être mis en oeuvre dans un ordinateur ou plus généralement dans un équipement utilisateur conforme à l'invention et comporte des instructions adaptées à la mise en oeuvre d'un procédé de configuration tel que décrit ci-dessus.

Dans un mode de réalisation non revendiqué, l'invention vise aussi un programme d'ordinateur sur un support d'enregistrement, ce programme étant susceptible d'être mis en oeuvre dans un ordinateur ou plus généralement dans une entité de gestion de règles conforme à l'invention et comporte des instructions adaptées à la mise en oeuvre d'un procédé de gestion de règles tel que décrit ci-dessus.

Chaque programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Dans un mode de réalisation non revendiqué, l'invention vise aussi un support d'information ou un support d'enregistrement lisibles par un ordinateur, et comportant des instructions du programme d'ordinateur mentionné ci-dessus.

Le support d'information ou d'enregistrement peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple un disque dur, ou une mémoire flash.

D'autre part, le support d'information ou d'enregistrement peut être un support transmissible tel qu'un signal électrique ou optique, qui peut être acheminé via un câble électrique ou optique, par lien radio, par lien optique sans fil ou par d'autres moyens.

Le programme selon l'invention peut être en particulier téléchargé sur un réseau de type Internet.

Alternativement, le support d'informations ou d'enregistrement peut être un circuit intégré dans lequel un programme est incorporé, le circuit étant adapté pour exécuter ou pour être utilisé dans l'exécution du procédé de configuration, conforme à l'invention, ou du procédé de gestion de règles, conforme à l'invention.

Selon un autre aspect, l'invention vise un système comprenant :
- au moins un équipement utilisateur selon l'invention, destiné à être utilisé par un utilisateur auquel est allouée une pluralité d'identifiants identifiant de manière unique ledit utilisateur sur au moins un réseau de communications ;
- une entité de gestion des règles selon l'invention.

Dans un mode particulier de réalisation :
- ledit au moins un réseau de communications comprend une pluralité de réseaux de communications ;
- le module de transmission de ladite entité de gestion est configuré pour transmettre ladite au moins une règle à une entité gérant ledit utilisateur dans chaque réseau de communications ; et
- chaque entité gérant ledit utilisateur dans chaque réseau de communications est configurée pour transmettre (directement ou indirectement) ladite au moins une règle audit équipement utilisateur de l'utilisateur lors d'une association dudit équipement utilisateur auprès de ce réseau de communications.

Dans un autre mode de réalisation, ladite pluralité d'identifiants est allouée à l'utilisateur par un unique réseau de communications et l'entité de gestion des règles est une entité de cet unique réseau de communications.

Dans un autre mode de réalisation encore, l'entité de gestion des règles est une entité indépendante dudit au moins un réseau.

Le système bénéficie des mêmes avantages que les procédés de configuration et de gestion de règles (ainsi que l'équipement utilisateur et l'entité de gestion des règles) selon l'invention, cités précédemment.

On peut également envisager, dans d'autres modes de réalisation, que le procédé de configuration, le procédé de gestion des règles, l'équipement utilisateur, l'entité de gestion des règles et le système selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1, déjà décrite, représente une infrastructure réseau de l'état de la technique dans laquelle une technique de découpage par tranche est mise en oeuvre ;
[Fig. 2] la figure 2 représente un système conforme à l'invention dans un premier mode de réalisation ;
[Fig. 3] la figure 3 représente un exemple d'architecture matérielle d'une entité de gestion des règles conforme à l'invention, appartenant au système de la figure 2, dans un mode particulier de réalisation ;
[Fig. 4] la figure 4 représente un exemple d'architecture matérielle et fonctionnelle d'un équipement utilisateur conforme à l'invention, appartenant au système de la figure 2, dans un mode particulier de réalisation ;
[Fig. 5] la figure 5 illustre les principales étapes d'un procédé de gestion de règles tel qu'il est mis en oeuvre par l'entité de gestion de règles du système de la figure 2, dans le premier mode de réalisation ; et
[Fig. 6] la figure 6 illustre les principales étapes d'un procédé de configuration tel qu'il est mis en oeuvre par un équipement utilisateur du système de la figure 2, dans le premier mode de réalisation.

### Description de l'invention

Comme mentionné précédemment, l'invention s'inscrit dans le contexte des réseaux de communication utilisant des techniques de découpage par tranches ou network slicing.

Dans ce contexte, elle propose un mécanisme permettant de configurer un équipement utilisateur avec des règles, chaque règle associant un ou plusieurs flux d'une application donnée à une ou plusieurs tranches de réseau, ces tranches de réseau pouvant éventuellement être rattachées à des réseaux (ex. PLMN) distincts. A cet effet, l'équipement utilisateur est par exemple doté d'une pluralité de modules USIM et/ou de cartes réseaux lui permettant de s'associer à ces différents réseaux, ou à un seul réseau mais via diverses souscriptions (abonnements).

On note que l'invention s'applique à tout type d'applications (audio, vidéo, pour le transfert de texte, lecteur multimédia, etc.), temps réel ou non, pouvant être installées de manière native sur les équipements utilisateurs, ou téléchargées depuis un serveur d'applications, public ou géré par un fournisseur de services, ou encore par l'opérateur de l'un des réseaux, etc.

La **figure 2** représente un système 1 conforme à l'invention, configuré pour la mise en oeuvre d'un tel mécanisme, dans un premier mode de réalisation.

Dans ce premier mode de réalisation, on suppose qu'un utilisateur U dispose d'un équipement utilisateur UE2, conforme à l'invention, et configuré pour recevoir une pluralité de cartes UICC (par exemple K cartes UICC, K désignant un entier supérieur ou égal à 2), chaque carte UICC stockant un module USIM. Chaque module USIMk, k désignant un entier compris entre 1 et K, comprend une application permettant à l'utilisateur U de s'enregistrer et d'accéder de manière sécurisée à un réseau de communications distinct NWk auprès duquel il a souscrit à un abonnement. A cet effet, chaque module USIMk stocke un identifiant IDk(U) alloué à l'utilisateur U par l'opérateur du réseau NWk. Cet identifiant l'identifie de manière unique et de manière permanente et invariante sur le réseau NWk (i.e. pendant toute la durée de son abonnement ou de sa souscription au réseau). On note que l'utilisateur U peut désigner indifféremment un utilisateur individuel ou un groupe d'utilisateurs, comme par exemple une collectivité.

Dans l'exemple sur la figure 2, les réseaux de communications NW1,...,NWK sont des réseaux 3GPP 5GS (5G System), et les identifiants IDk(U) sont des identifiants de type SUPI. Toutefois, aucune limitation n'est attachée à la nature des réseaux de communications NW1, NW2,...,NWK, ni à la nature des réseaux d'accès permettant d'y accéder. Il peut s'agir notamment de n'importe quels réseaux mobiles cellulaires tels que définis par le standard 3GPP (2G, 3G, 4G, 5G, etc.), ou d'autres types de réseaux, comme par exemple des réseaux fixes, des réseaux non-3GPP tels que des réseaux WLAN (Wireless Local Area Network) (ex. réseaux Wi-Fi (Wireless Fidelity)), etc.. Les identifiants IDk(U) dépendent de la nature des réseaux considérés. Ainsi, il peut s'agir par exemple en variante d'identifiants de type IMSI pour des réseaux 2G, 3G, 4G, d'une adresse MAC pour un réseau WLAN, etc.

On suppose que chaque réseau NWk met en oeuvre pour ses abonnés une technique de découpage en tranches, telle qu'évoquée dans la spécification 3GPP TS 23.501 citée précédemment. On note SL1(k),...,SLNk(k) les tranches disponibles du réseau NWk, Nk désignant un nombre entier supérieur ou égal à 1 correspondant aux nombres de tranches proposées par le réseau NWk, Nk pouvant varier d'un réseau NWk à l'autre, et étant susceptible d'évoluer dans le temps. Une telle technique de découpage en tranches est connue en soi et non décrite plus en détail ici. De façon connue, chaque tranche de réseau est identifiée de manière unique sur le réseau auquel elle appartient par un identifiant S-NSSAI (pour « Single Network Slice Sélection Assistance Information ») défini par le standard 3GPP dans les spécifications TS 23.501 et TS 23.003 intitulée « Technical Spécification Group Core Network and Terminals; Numbering, addressing and Identification », v16.0.0, septembre 2019.

Dans le premier mode de réalisation décrit ici, les règles, notées de façon générale RUL, utilisées pour la configuration de l'équipement utilisateur UE2 sont déterminées par une entité 3 de gestion de règles, conforme à l'invention, associée aux différents réseaux NW1,...,NWK, et hébergée dans une passerelle 4 de médiation s'interfaçant avec ces différents réseaux. Plus particulièrement ici, dans l'hypothèse de réseaux 5G, la passerelle 4 de médiation s'interface avec les entités PCF (Policy Control Function) de gestion de la politique des flux de chacun des réseaux NW1,...,NWK, référencées par PCF1,...,PCFK respectivement. De façon connue en soi, les entités PCF permettent le contrôle des politiques dans les réseaux 5GS, notamment au niveau des entités AMF (Access and Mobility Management Function) des réseaux NW1,...,NWK (référencées par AMF1,...,AMFK respectivement), chargées de l'enregistrement/attachement (ou plus généralement de l'association) des équipements utilisateurs auprès des réseaux NW1,...,NWK et de leur localisation.

On note que dans l'exemple envisagé à la figure 2, par souci de simplification, l'entité 3 de gestion des règles est associée aux K réseaux NW1,...,NWK correspondant aux K modules USIM de l'équipement utilisateur UE2, c'est-à-dire qu'elle définit des règles RUL pour les utilisateurs ayant souscrit à des abonnements auprès de ces réseaux et a, à cet effet, une visibilité sur les caractéristiques des tranches de réseau correspondant à ces différents réseaux. Toutefois cette hypothèse n'est pas limitative en soi. L'entité 3 de gestion des règles peut être associée à d'autres réseaux en supplément des réseaux NW1,...,NWK. Il peut s'agir également d'une entité indépendante des réseaux NW1,...,NWK (qui peut exploiter par exemple la connectivité de l'un des réseaux pour communiquer avec l'équipement utilisateur UE2 et découvrir par des informations que lui envoie l'équipement utilisateur UE2, les tranches offertes à celui-ci par chacun des réseaux).

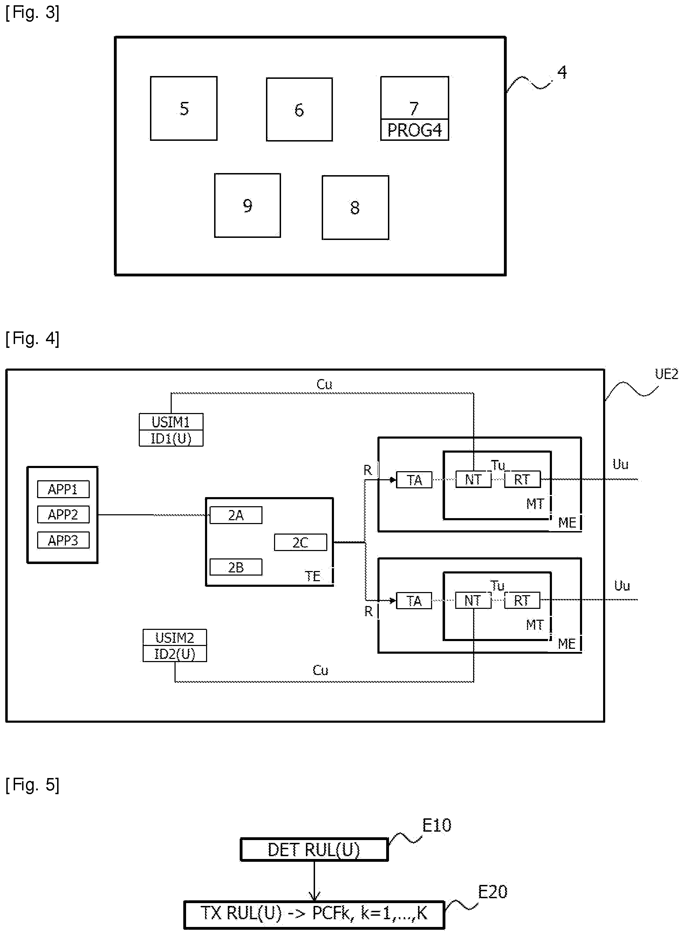

Dans le mode de réalisation décrit ici, la passerelle 4 de médiation a l'architecture matérielle d'un ordinateur, telle que représentée schématiquement à la **figure 3****,** sur laquelle s'appuie l'entité 3 de gestion des règles. Elle comprend notamment un processeur 5, une mémoire vive 6, une mémoire morte 7, une mémoire flash non volatile 8, ainsi que des moyens de communication 9 comprenant une ou plusieurs interfaces de communication lui permettant de communiquer notamment avec les entités PGF des réseaux NW1,...,NWK.

Dans le mode de réalisation décrit ici, la mémoire morte 7 de la passerelle 4 de médiation est un support d'enregistrement conforme à l'invention, lisible par le processeur 5 et sur lequel est enregistré un programme d'ordinateur PROG4 selon l'invention, qui comporte des instructions définissant les principales étapes d'un procédé de gestion de règles conforme à l'invention. Le programme PROG4 définit de manière équivalente des modules fonctionnels de l'entité 3 de gestion des règles (et corrélativement de la passerelle 4 de médiation), qui s'appuient ou commandent les éléments matériels 5 à 9 cités précédemment. Ces modules fonctionnels comprennent notamment (cf. figure 2) :
- un module 3A de détermination, configuré pour déterminer, pour au moins un équipement utilisateur, au moins une règle RUL telle que décrite plus en détail ultérieurement, associant une ou plusieurs tranches d'un ou de plusieurs réseaux à un ou plusieurs flux d'au moins une application ; et
- un module 3B de transmission configuré pour transmettre ladite au moins une règle RUL vers le ou les équipements utilisateurs concernés. On note que cette transmission peut se faire de manière directe ou indirecte, via un ou plusieurs noeuds intermédiaires. Ainsi, dans le premier mode de réalisation décrit ici, les règles RUL sont envoyées vers les équipements utilisateurs concernés par l'intermédiaire des entités PCF et AMF des réseaux auxquels ils sont associés, comme décrit davantage ultérieurement.

Dans l'exemple envisagé à la figure 2, l'équipement utilisateur UE2 est un terminal, tel que par exemple un téléphone intelligent ou smartphone, un ordinateur, ou encore une tablette numérique.

La **figure 4** illustre schématiquement un exemple d'architecture fonctionnelle et matérielle de l'équipement utilisateur UE2. Dans l'exemple de la figure 4, l'équipement utilisateur UE2 est un dispositif dit dual-SIM, c'est-à-dire qu'il est configuré pour recevoir deux modules USIM distincts, à savoir un module USIM1 et un module USIM2, lui permettant de s'associer respectivement aux deux réseaux NW1 et NW2.

De façon conventionnelle, l'équipement utilisateur UE2 comprend également un module TE (pour « Terminal Equipment » en anglais) et deux modules ME (pour « Mobile Equipment » en anglais). Chaque module ME comprend lui-même un module TA (pour « Terminal adaptator »), un module NT (pour « Network Termination ») et un module RT (pour « Radio Termination »). Ces différents modules communiquent entre eux via diverses interfaces (Cu, R, Tu, Uu) comme illustré sur la figure. De tels modules et interfaces sont connus en soi et décrits notamment dans le document de spécification 3GPP TS 21.905 intitulé « Technical Spécification Group Services and System Aspects; Vocabulary for 3GPP Spécifications », v15.1.0, décembre 2018, et au chapitre 9 du livre de A. Kukushkin intitulé « Introduction to Mobile Network Engineering: GSM, 3G-WCDMA, LTE and the Roard to 5G », John Wiley and Sons, 2018 (cf. figure 9.3 en page 123). L'interface Tu relie les parties spécifiques au réseau d'accès et au coeur de réseau dans l'équipement utilisateur ; elle est généralement propriétaire.

Le module TE de l'équipement utilisateur UE2 se distingue d'un module TE conventionnel en ce qu'il intègre ici différents modules configurés pour mettre en oeuvre un procédé de configuration selon l'invention, et plus particulièrement dans le premier mode de réalisation décrit ici :
- un module 2A d'accès, configuré pour accéder via une interface applicative prévue à cet effet, à une pluralité d'applications Appj, j=1,...,J, J désignant un entier supérieur ou égal à 1, installées par exemple sur l'équipement utilisateur UE2 (par exemple dans une mémoire non volatile 10 de l'équipement utilisateur UE2). Dans l'exemple illustré à la figure 4, trois applications App1, App2 et App3 sont installées sur l'équipement utilisateur UE2 ;
- un module 2B d'obtention, configuré pour obtenir au moins une règle RUL telle que déterminée par l'entité 3 de gestion des règles pour les applications installées sur l'équipement utilisateur UE2 ; et
- un module 2C d'exécution, configuré pour exécuter ladite au moins une règle lors d'un accès aux applications installées sur l'équipement utilisateur UE2.

Dans le premier mode de réalisation décrit ici, les modules 2A, 2B et 2C sont par exemple des modules logiciels définis au moyen d'instructions d'un programme d'ordinateur PROG2, comprenant des instructions correspondant aux principales étapes d'un procédé de configuration selon l'invention.

On note que les applications Appj, j=1,...,J ne sont pas nécessairement des applications présentes nativement sur l'équipement utilisateur UE2 ; elles peuvent, au moins pour une partie d'entre elles, avoir été téléchargées ultérieurement sur l'équipement utilisateur UE2 depuis un serveur d'applications public ou privé. En outre, les applications et le nombre d'applications présentes sur l'équipement utilisateur UE2 sont susceptibles d'évoluer dans le temps (des applications peuvent être supprimées, d'autres ajoutées, si bien que les règles RUL configurées au niveau de l'équipement utilisateur UE2 sont également susceptibles d'évoluer dans le temps). On suppose ici que chaque application installée ou non sur l'équipement utilisateur UE2 et notée de manière générale App (par exemple App=App1, App2 ou App3 dans l'exemple envisagé sur la figure 4), est identifiée par un identifiant d'application noté IDApp. Aucune limitation n'est attachée à la forme de cet identifiant dès lors qu'il est compréhensible et connu de l'entité de gestion 3 et de l'équipement utilisateur UE2.

En variante, tout ou partie des applications APPj, j=1,...,J peut être installée sur une entité physique distincte de l'équipement utilisateur UE2, par exemple sur un serveur accessible par ce dernier.

Par ailleurs, aucune limitation n'est attachée à la nature de l'équipement utilisateur UE2. L'invention s'applique en effet également à d'autres types d'équipements utilisateurs que des terminaux, et notamment à des routeurs, ou à des équipements utilisateurs dont les modules TE et ME peuvent être répartis sur plusieurs entités physiques distinctes (par exemple en partie sur un terminal et en partie sur un routeur d'entreprise, etc.).

Nous allons maintenant décrire, en référence à la **figure 5****,** les différentes étapes du procédé de gestion de règles selon l'invention telles qu'elles sont mises en oeuvre par l'entité 3 de gestion des règles dans le premier mode de réalisation.

Dans ce premier mode de réalisation, les règles RUL sont déterminées par l'entité 3 de gestion des règles associée aux réseaux NW1,...,NWK, via son module de détermination 3A, lors d'une phase dite de provisionnement, pour une pluralité d'applications App (étape E10). Cette pluralité d'applications inclut notamment ici tout ou partie des applications Appj, j=1,...,J installées sur l'équipement utilisateur UE2 de l'utilisateur U.

En outre, dans le premier mode de réalisation décrit ici, l'entité 3 de gestion des règles détermine des règles RUL individuellement pour chaque utilisateur pour lequel elle est chargée de définir des règles (autrement dit ici, pour chaque utilisateur ayant souscrit un abonnement auprès des réseaux NW1,...,NWK auxquels l'entité 3 de gestion des règles est associée). A cet effet, l'entité 3 de gestion des règles tient compte des caractéristiques des abonnements/souscriptions de l'utilisateur auprès des opérateurs des réseaux NW1,...,NWK. On suppose à cet effet que l'entité 3 de gestion des règles est par exemple configurée avec des informations sur les souscriptions dont dispose chacun des utilisateurs pour lesquels elle doit définir des règles. En particulier, l'entité 3 de gestion des règles est configurée ici avec la liste des réseaux (ex. PLMN) auxquels ces utilisateurs ont accès via leurs équipements utilisateurs respectifs, les droits offerts par leurs abonnements, les attributs de qualité de service associés, les caractéristiques matérielles et logicielles des équipements utilisateurs des utilisateurs, etc. Bien entendu cette liste n'est ni exhaustive ni limitative de l'invention. Il ne s'agit que d'exemples illustratifs d'informations avec lesquelles l'entité 3 de gestion des règles peut être configurée et qu'elle peut utiliser pour définir les règles RUL. En outre, il convient de noter que ces informations sont susceptibles d'évoluer dans le temps et sont donc mises à jour dynamiquement au niveau de l'entité 3 de gestion des règles (par exemple de façon continue, ou à des intervalles de temps (pré)déterminés, ou encore sur détection d'un changement, etc.).

En variante, l'entité 3 de gestion des règles peut accéder à ces informations en consultant directement les opérateurs des réseaux auprès desquels les utilisateurs ont souscrit un abonnement ou en accédant à une base de données renseignée et mise à jour par ces opérateurs de sorte qu'elle reflète un état courant des abonnements souscrits par les utilisateurs auprès de ces opérateurs.

Selon une autre variante encore, une application installée dans les équipements utilisateurs des utilisateurs gérés par l'entité 3 de gestion des règles peut être configurée pour s'enregistrer auprès de l'entité 3 de gestion des règles et lui fournir ces informations.

On note que dans un autre mode de réalisation, l'entité 3 de gestion des règles peut déterminer des règles RUL non plus individuellement pour chaque utilisateur, mais par application, tous utilisateurs confondus.

Dans le premier mode de réalisation décrit ici, la pluralité d'applications pour laquelle l'entité 3 de gestion des règles détermine un ensemble de règles RUL pour chaque utilisateur est prédéfinie. Dans la suite de la description, on fait référence pour faciliter la compréhension aux règles établies pour l'utilisateur U, les considérations présentées s'appliquant toutefois indifféremment à tous les utilisateurs gérés par l'entité 3 de gestion de règles.

Il peut s'agir notamment d'applications pour lesquelles des accords ont été établis entre les fournisseurs des applications et les opérateurs des réseaux NW1,...,NWK associés à l'entité 3 de gestion des règles, ou ceux auprès desquels l'utilisateur U considéré a souscrit à un abonnement.

En variante, la pluralité d'applications peut être établie en fonction des services souscrits par l'utilisateur U auprès des réseaux NW1,...,NWK associés à l'entité 3 de gestion des règles. Elle peut également tenir compte des applications installées sur l'équipement utilisateur UE2 de l'utilisateur U. Ainsi, dans l'exemple envisagé à la figure 3, l'entité 3 de gestion des règles peut déterminer des règles pour les trois applications App1, App2 et App3 installées sur l'équipement utilisateur UE2. A cet effet, on peut envisager que l'équipement utilisateur UE2 informe l'entité 3 de gestion des règles des applications qu'il héberge via un réseau auquel il est associé par l'intermédiaire d'un de ses modules USIM. Alternativement, un tel réseau peut détecter qu'une application est installée sur l'équipement utilisateur UE2 (par analyse du trafic relatif à l'équipement utilisateur UE2) et en informer l'entité 3 de gestion des règles.

Comme mentionné précédemment, chaque règle déterminée par l'entité 3 de gestion des règles via son module 3A de détermination associe à au moins un flux d'une application App donnée, pour l'acheminement des données relatives à ce flux, au moins une tranche d'un réseau de communication parmi les réseaux NW1,...,NWK auprès desquels l'utilisateur U a souscrit un abonnement. Une règle différente peut être déterminée pour chaque flux distinct de l'application, pour une partie des flux (par exemple par type de flux), ou pour la totalité des flux de l'application, selon la granularité souhaitée. Répartir des flux d'une même application sur des tranches de réseau distinctes, par exemple en fonction de la nature (i.e. du type) de ces flux (ex. audio, vidéo, texte), peut permettre une meilleure adaptation des conditions de transmission de ces flux. Cela peut également permettre une répartition de la charge sur les différentes tranches de réseau disponibles.

Aucune limitation n'est attachée aux critères retenus pour associer les tranches de réseau aux flux de chaque application considérée par l'entité 3 de gestion des règles. L'entité 3 de gestion des règles dispose avantageusement d'une visibilité sur l'ensemble des tranches de réseau proposées par l'ensemble des réseaux NW1,...,NWK, si bien qu'elle peut associer à un flux d'une application des tranches de réseau appartenant à des réseaux différents.

Cette association peut être faite dynamiquement, en fonction de connaissances sur l'état des tranches de réseau disponibles correspondant aux différents réseaux NW1,...,NWK. Elle peut également s'appuyer sur la consultation d'une base de données interne à l'entité 3 de gestion des règles ou accessible sur un serveur externe par celle-ci associant à un identifiant d'application et/ou à un ou plusieurs identifiants de flux de ladite application, des tranches de réseau adaptées pour l'acheminement des données relatifs à ces flux. Une telle base de données peut être établie en concertation avec les opérateurs des réseaux NW1,...,NWK correspondants aux tranches de réseau disponibles.

Plus spécifiquement, conformément à l'invention, chaque règle déterminée pour un ou plusieurs flux d'une application pour l'utilisateur U associe à ce ou ces flux, au moins une tranche de réseau SLi(k) (i pouvant être égal à 1,...,Nk) et une information (explicite) liant cette tranche de réseau à l'identifiant IDk(U) identifiant l'utilisateur U de manière unique sur le réseau NWk (k pouvant être égal à 1,...K) auquel cette tranche de réseau appartient.

Dans le premier mode de réalisation, chaque identifiant IDk(U) identifiant l'utilisateur U sur un réseau NWk différent, cette information peut consister en un identifiant du réseau NWk, aussi couramment désigné par PLMNId et correspondant aux codes MCC (pour « Mobile Country Code » en anglais) et MNC (pour « Mobile Network Code » en anglais) du réseau NWk. En effet, cet identifiant de réseau désigne dans le premier mode de réalisation de façon univoque l'identifiant IDk(U) et donc le module USIMk que l'utilisateur U doit utiliser pour accéder à cette tranche de réseau.

En variante, cette information peut être l'identifiant IDk(U) lui-même, ou un identifiant d'un module de l'équipement utilisateur UE2 de l'utilisateur U contenant ledit identifiant IDk(U) (ex. module USIM ou carte réseau), tel un identifiant IGGid (numéro de série d'une carte UICC) ou eID.

Comme mentionné ci-avant, l'entité 3 de gestion des règles peut associer à chaque flux ou à un ensemble de flux d'une application une ou plusieurs tranches de réseau distinctes, sélectionnées par l'entité 3 de gestion des règles parmi les tranches de réseau offertes par les réseaux NW1,...,NWK. Chaque flux et chaque application concernés par une règle sont identifiés dans la règle par un identifiant permettant de les désigner de manière univoque auprès des réseaux et auprès de l'équipement utilisateur UE2. Lorsque plusieurs tranches de réseau sont associées à un même flux ou un même ensemble de flux, ces tranches de réseau peuvent appartenir à un même réseau ou à des réseaux différents. En outre, elles peuvent être associées à une priorité d'utilisation attribuée par l'entité 3 de gestion des règles ou la règle peut comprendre une ou plusieurs instructions d'utilisation de ces multiples tranches de réseau, comme par exemple une instruction de répartir la charge sur les différentes tranches de réseau.

Différents critères peuvent être considérés par l'entité 3 de gestion des règles pour attribuer une priorité d'utilisation à chaque tranche de réseau. Les priorités fixées par l'entité 3 de gestion des règles peuvent tenir compte par exemple des caractéristiques de l'abonnement de l'utilisateur U, et/ou des spécificités matérielles et/ou logicielles de l'équipement utilisateur UE2 de l'utilisateur U, ou viser la réalisation d'une répartition de charge sur les différentes tranches de réseau, etc.

A titre illustratif, des exemples de règles sont fournis dans la table 1 ci-dessous.

**[Table 1]**

| RUL | IDApp | IDFlow | Contexte | S-NSSAI/PLMNId |
|---|---|---|---|---|
| RUL1 | App1 | Flow1 | Connectivité unique | PRIO1: S-NSSAI1/PLMN1 |
| | | | | PRIO2: S-NSSAI1/PLMN2 |
| RUL2 | App1 | Flow1 | Connectivité multiple | S-NSSAI1/PLMN1 |
| | | | | S-NSSAI1/PLMN2 |
| RUL3 | App1 | Flow1 | Connectivité multiple | S-NSSAI1/PLMN1 |
| | | | | S-NSSAI1/PLMN2 |
| | | | | instruction : réaliser une répartition de charge entre les tranches |

Dans cette table :
- le champ « IDFlow » désigne les identifiants du ou des flux concernés par la règle ; on note que les flux concernés par les règles peuvent être désignés par leurs caractéristiques (par exemple un flux peut être désigné par son adresse de destination, le port qu'il utilise, etc.), sans avoir besoin nécessairement de recourir à un identifiant ;
- le champ « Contexte » indique dans quel contexte de connectivité de l'équipement utilisateur la règle s'applique (selon s'il est dans une configuration où il bénéficie d'une connectivité unique, i.e. via un unique module USIM, ou d'une connectivité multiple simultanée) ; on note que ce contexte peut être transmis dans la règle ou être un pré-requis de l'équipement utilisateur ; et
- le champ « S-NSSAI/PLMNId» désigne les tranches associées au flux, chaque tranche étant identifiée par un identifiant S-NSSAI et associée à une information permettant de relier cette tranche à un identifiant de l'utilisateur U l'identifiant de manière unique sur le réseau auquel appartient la tranche. Dans la table 1, cette information est l'identifiant du réseau NWk concerné (PLMNId). Chaque tranche peut également être associée à une priorité d'utilisation et/ou, lorsque plusieurs tranches sont désignées, une règle d'utilisation de ces tranches peut être ajoutée dans la règle.

En outre, lorsque des règles sont déterminées pour une pluralité d'applications, l'entité de gestion 3 peut insérer dans chaque règle une priorité d'utilisation de la règle pour hiérarchiser en quelque sorte l'accès aux tranches des réseaux NW1,...,NWK par les applications. Ces priorités d'utilisation visent à permettre une gestion des conflits entre règles pouvant se présenter au niveau de l'équipement utilisateur UE2 lors d'un accès concurrent à plusieurs applications simultanément. Par exemple, un tel conflit se présente lorsque plusieurs applications sont exécutées simultanément et que chaque règle associée à chaque application renvoie vers l'utilisation d'un réseau distinct alors que l'équipement utilisateur UE2 ne peut accéder qu'à un seul réseau à un instant donné (l'équipement utilisateur UE2 est alors dit « single active »). On note que ces priorités d'utilisation peuvent avoir une valeur contraignante pour l'équipement utilisateur UE2 (qui est alors tenu de les appliquer pour gérer les conflits entre applications), ou au contraire une valeur indicative que l'équipement utilisateur UE2 est libre de ne pas prendre en compte.

Ainsi, selon la règle RUL1, lorsque l'équipement utilisateur UE2 bénéficie d'une connectivité simple via l'un de ses modules USIM (i.e. il ne peut utiliser que l'un de ces modules à un instant donné, par exemple parce qu'il est configuré en mode « single active »), les flux d'identifiant Flow1 de l'application App1 sont associés en priorité (correspondant à « PRIO1 ») à la tranche du réseau NW1 (PLMNId=PLMN1) ayant l'identifiant S-NSSAI1, puis selon une priorité moindre (correspondant à « PRIO2 »), à la tranche du réseau PLMN2 ayant l'identifiant S-NSSAI1. En d'autres termes, selon cette règle RUL1, l'équipement utilisateur UE2 est tenu d'utiliser en priorité pour les flux correspondant à l'identifiant Flow1 de l'application App1 la tranche de réseau S-NSSAI1 du réseau NW1 (correspondant à l'identifiant PLMN1). S'il ne dispose pas de connectivité sur le réseau NW1 (par exemple parce que son module USIM1 est désactivé), alors il peut utiliser pour ces flux la tranche de réseau S-NSSAI1 du réseau NW2.

Selon la règle RUL2, lorsque l'équipement utilisateur UE2 bénéficie d'une connectivité multiple via ses deux modules USIM (i.e. il peut utiliser ses modules USIM1 et USIM2 simultanément), les flux d'identifiant Flow1 de l'application App1 peuvent être envoyés indifféremment sur la tranche du réseau NW1 (PLMNId=PLMN1) ayant l'identifiant S-NSSAI1, ou sur la tranche du réseau PLMN2 ayant l'identifiant S-NSSAI1.

Selon la règle RUL3, lorsque l'équipement utilisateur UE2 bénéficie d'une connectivité multiple via ses deux modules USIM (i.e. il peut utiliser ses modules USIM1 et USIM2 simultanément), les flux d'identifiant Flow1 de l'application App1 sont répartis sur la tranche du réseau NW1 (PLMNId=PLMN1) ayant l'identifiant S-NSSAI1 et sur la tranche du réseau PLMN2 ayant l'identifiant S-NSSAI1 de sorte à équilibrer la charge entre les deux tranches de réseau. A cet effet, l'équipement utilisateur UE2 peut avoir été préconfiguré pour gérer une répartition de la charge pour une ou plusieurs applications données.

On note qu'en variante, sur réception d'une règle associant à un ou plusieurs flux d'une application plusieurs tranches de réseau distinctes, en l'absence d'instruction complémentaire fournie par l'entité 3 de gestion des règles pour l'utilisation de ces multiples tranches de réseau, l'équipement utilisateur UE2 peut interroger l'entité 3 de gestion des règles sur la possibilité de répartir la charge entre ces tranches de réseau multiple, et mettre en oeuvre une telle répartition de charge sur réception d'une réponse positive de l'entité 3 de gestion des règles.

Bien entendu ces exemples ne sont donnés qu'à titre illustratif et d'autres exemples de règles peuvent être envisagés.

Une fois les règles RUL déterminées par l'entité 3 de gestion pour chaque utilisateur et pour chaque application, elles sont transmises par cette dernière via son module de transmission 3B vers les utilisateurs concernés (étape E20). Dans le premier mode de réalisation décrit ici, cette transmission est faite de manière indirecte via les réseaux NW1,...,NWK auprès desquels les utilisateurs ont souscrit un abonnement, et plus particulièrement via les entités PCF et AMF de ces résea ux.

Plus spécifiquement, dans le premier mode de réalisation décrit ici, lors de la phase de provisionnement, l'entité 3 de gestion des règles envoie à chaque entité PCFk, k=1,...,K de chaque réseau NWk, k=1,...,K, les règles RUL des utilisateurs ayant souscrit un abonnement auprès de ce réseau. Dans l'exemple de l'utilisateur U ayant souscrit un abonnement auprès des réseaux NW1,...,NWK, l'entité 3 de gestion des règles envoie ainsi les règles RUL(U) déterminées pour l'utilisateur U aux entités PCF1, PCF2,...PCFK des réseaux NW1,NW2,...,NWK. Cette transmission clôture la phase de provisionnement.

On note que l'entité 3 de gestion des règles peut, dans un souci de garantir l'intégrité et l'actualité des règles RUL(U) arrivant à l'équipement utilisateur U via les réseaux NW1,..,NWK, signer ces règles (de façon connue en soi et non décrite ici) et/ou leur associer un horodatage.

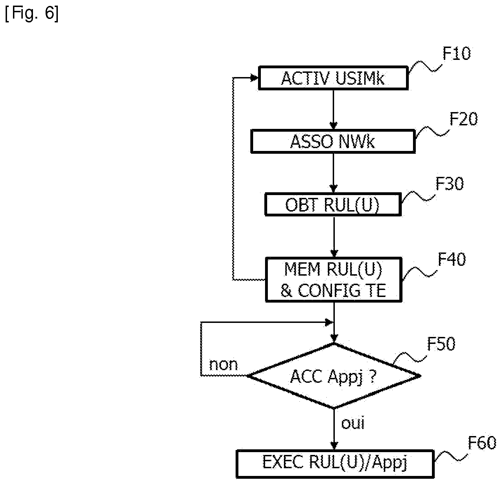

Nous allons maintenant décrire, en référence à la **figure 6****,** les différentes étapes du procédé de configuration selon l'invention telles qu'elles sont mises en oeuvre par l'équipement utilisateur UE2 de l'utilisateur U (et plus spécifiquement par son module TE) dans le premier mode de réalisation.

Dans ce premier mode de réalisation, les règles RUL(U) déterminées par l'entité 3 de gestion des règles pour l'utilisateur U sont transmises à l'équipement utilisateur UE2 lorsqu'ils s'associent aux différents réseaux NW1,...,NWK.

Plus spécifiquement, lorsqu'un module USIMk (k choisi parmi 1,...,K) est activé sur l'équipement utilisateur UE2 pour accéder au réseau NWk (manuellement par l'utilisateur U ou automatiquement, par exemple lors de la mise sous tension de l'équipement utilisateur UE2) (étape F10), l'équipement utilisateur UE2 s'associe par l'intermédiaire de son module USIMk au réseau NWk correspondant au moyen de l'identifiant IDk(U) identifiant l'utilisateur U de manière unique sur le réseau NWk (étape F20). Cette association peut consister, selon le réseau concerné, en un enregistrement (ou un attachement) de l'équipement utilisateur UE2 auprès du réseau NWk et plus particulièrement de l'entité AMFk du réseau NWk ici, et comprendre notamment une authentification de ce dernier au moyen de l'identifiant IDk(U). Une telle procédure est connue en soi et n'est pas décrite davantage ici.

Cette association déclenche l'obtention par l'équipement utilisateur UE2 des règles RUL(U) déterminées par l'entité 3 de gestion des règles pour l'utilisateur U pour une pluralité d'applications App (étape F30). Plus spécifiquement, l'entité AMFk auprès de laquelle s'associe l'équipement utilisateur UE2 sollicite l'entité PCFk pour obtenir les règles RUL(U) déterminées par l'entité 3 de gestion des règles. Sur réception de ces règles RUL(U), l'entité AMFk les transmet à l'équipement utilisateur UE2, et plus spécifiquement au module 2B du module TE de l'équipement utilisateur UE2, par exemple dans les règles URSP (UE Route Sélection Policy) définies par le standard 3GPP et décrites notamment dans le document 3GPP TS 24.526 cité précédemment.

Les règles RUL(U) ainsi obtenues sont transmises au module 2C d'exécution de l'équipement utilisateur UE2 pour interprétation et application. Elles sont mémorisées par ce dernier, par exemple dans la mémoire non volatile de l'équipement utilisateur UE2 (étape F40). Dès lors, le module TE est configuré pour exécuter par l'intermédiaire de son module d'exécution 2C les règles RUL(U) lorsque l'équipement utilisateur UE2 accède, via son module d'accès 2A à l'une des applications qu'il héberge (dans l'exemple de la figure 3, à l'une quelconque des applications App1, App2 et App3) (ou en variante, qui se trouve sur un serveur distant).

Cette opération est répétée pour chaque réseau NWk auquel l'équipement utilisateur UE2 s'associe en utilisant l'identifiant unique IDk(U) qui lui a été alloué par le réseau NWk. On note que l'équipement utilisateur UE2 peut de ce fait recevoir plusieurs fois les règles RUL(U). Dans une variante de réalisation, l'entité 3 de gestion des règles peut envoyer à l'équipement utilisateur UE2 des règles de priorité à appliquer le cas échéant entre les règles reçues des différents réseaux NWk, notamment si celles-ci diffèrent les unes des autres.

Sur détection par le module TE de l'équipement utilisateur UE2 d'un accès à une application Appj (réponse oui à l'étape test F50), le module 2C d'exécution identifie si au moins une règle parmi les règles RUL(U) concerne l'application Appj et le cas échéant, exécute lors de l'accès à l'application Appj la ou les règles identifiées, notées RUL(U)/Appj, pour l'acheminement des flux relatifs à cette application (étape F60). En d'autres termes, il émet et reçoit sur la ou les tranches de réseau associées aux flux indiquées dans les règles RUL(U)/Appj les flux de l'application selon les consignes indiquées dans les règles et le cas échéant, les priorités attribuées aux différentes tranches de réseau.

On note qu'en cas d'exécution simultanée de plusieurs applications et de règles en conflit, comme décrit précédemment, l'équipement utilisateur UE2 peut sélectionner la règle à exécuter en fonction d'une priorité d'utilisation fournie par l'entité 3 de gestion des règles dans chaque règle.

Par ailleurs, on note que si une nouvelle application est installée sur l'équipement utilisateur UE2 et que celui-ci ne dispose pas de règles pour cette application, il peut solliciter l'entité 3 de gestion des règles pour qu'elle lui fournisse une telle règle en lui indiquant par exemple l'identifiant de l'application nouvellement installée.

Ainsi grâce à l'invention, l'équipement utilisateur UE2 peut bénéficier des avantages combinés du « network slicing », d'une multiple connectivité, et d'un traitement différencié des applications pouvant aller jusqu'à une différenciation des flux relatifs à chaque application. Il en résulte une expérience utilisateur grandement améliorée par rapport à l'état de la technique, et ce de façon transparente pour l'utilisateur, la configuration de son équipement utilisateur UE2 pouvant se faire automatiquement sans nécessiter son intervention. On note toutefois que dans un mode particulier de réalisation, on peut envisager une configuration manuelle de l'équipement utilisateur UE2 par l'utilisateur U pour utiliser les règles RUL(U). L'utilisateur peut par exemple opérer une sélection parmi les règles qui lui sont proposées, ou supprimer celles qui ne concernent pas des applications installées sur son équipement utilisateur UE2, etc.

Dans le premier mode de réalisation qui vient d'être décrit en référence aux figures 2 à 6, les identifiants IDk(U) stockés dans les modules USIMk, k=1,...,K embarqués dans l'équipement utilisateur UE2 identifient l'utilisateur U sur des réseaux NW1,...,NWK distincts (par exemple, gérés par des opérateurs différents). Toutefois l'invention ne se limite pas à ce contexte. Elle peut également s'appliquer, dans un deuxième mode de réalisation, lorsque les les identifiants IDk(U) stockés dans les modules USIMk, k=1,...,K embarqués dans l'équipement utilisateur UE2 identifient l'utilisateur U sur un même réseau (ex. NW1=NW2=...=NWK correspondent à une même infrastructure de réseau gérée par un même opérateur et associée à un même code opérateur MCC-MNC), mais correspondent à des abonnements (ou offres de souscription) différents. Dans l'exemple illustré à la figure 4, le module USIM1 correspond par exemple à un abonnement personnel souscrit par l'utilisateur U auprès de l'opérateur d'un réseau NW1 (et correspondant à un identifiant ID1(U)) et le module USIM2 à un abonnement professionnel souscrit par l'utilisateur U auprès de l'opérateur du même réseau NW1 (et correspondant à un identifiant ID2(U)). Les identifiants ID1(U) et ID2(U) sont par exemple des identifiants IMSI ou SUPI identifiant de manière unique et distincte l'utilisateur U sur le réseau NW1 dans le cadre de ses deux abonnements. Ainsi, lorsque l'équipement utilisateur UE2 accède au réseau NW1 via l'abonnement personnel de l'utilisateur U, il utilise le module USIM1 pour s'associer au réseau NW1 et l'identifiant ID1(U) correspondant stocké dans le module USIM1. Lorsque l'équipement utilisateur UE2 accède au réseau NW1 via l'abonnement professionnel de l'utilisateur U, il utilise le module USIM2 pour s'associer au réseau NW1 et l'identifiant ID2(U) correspondant stocké dans le module USIM2.

Dans ce deuxième mode de réalisation, les tranches de réseau considérées par l'entité 3 de gestion des règles lors de l'étape E10 de détermination des règles appartiennent donc à un même réseau NW1. Toutefois elles peuvent correspondre à des abonnements différents de l'utilisateur U et donc à des qualités de service différentes, des accès à des services différents, etc. En d'autres termes, un utilisateur peut avoir accès à des tranches de réseau différentes selon l'abonnement et plus précisément le module USIM qu'il utilise pour accéder au réseau NW1. L'information reliant chaque tranche identifiée dans une règle à un identifiant IDk(U) de l'utilisateur U ne peut alors se limiter à un identifiant du réseau NW1 puisque celui-ci est le même pour chaque identifiant IDk(U) de l'utilisateur U. Dans le deuxième mode de réalisation, cette information consiste donc préférentiellement en l'identifiant IDk(U) lui-même correspondant au réseau considéré, ou en un identifiant du module USIM contenant l'identifiant IDk(U) et donc utilisé pour accéder au réseau considéré.

En outre, il convient de noter que dans le deuxième mode de réalisation, l'entité 3 de gestion des règles peut être intégrée dans une entité du réseau NW1. Dans ce cas, les règles RUL(U) peuvent être transmises directement par l'entité 3 de gestion des règles à l'équipement utilisateur UE2 lors de son association au réseau NW1 (quel que soit le module USIM utilisé) ou par l'intermédiaire, comme dans le premier mode de réalisation précédemment décrit, d'un ou de plusieurs modules PCF et AMF du réseau NW1 (on peut, selon l'architecture envisagée, considérée un même PCF et un même AMF pour les deux souscriptions, ou un PCF et un AMF dédiés pour chaque souscription).

Les autres étapes et modes de fonctionnement décrits en référence au premier mode de réalisation sont applicables au deuxième mode de réalisation.

On peut envisager également un troisième mode de réalisation dans lequel l'équipement utilisateur UE2 est configuré pour recevoir des modules USIM lui permettant de s'associer à des réseaux distincts et des modules USIM lui permettant de s'associer à un même réseau, correspondant à une combinaison des deux premiers modes de réalisation décrits. Préférentiellement, dans ce troisième mode de réalisation, l'entité 3 de gestion des règles est une entité externe aux réseaux considérés, et l'information reliant chaque tranche de réseau à un identifiant IDk(U) de l'utilisateur U est, comme dans le deuxième mode de réalisation, soit l'identifiant IDk(U) lui-même soit un identifiant du module contenant l'identifiant IDk(U).

Dans les trois modes de réalisation décrits précédemment, les règles RUL(U) sont fournies à l'équipement utilisateur UE2 lors de son association au(x) réseau(x) auprès duquel il a souscrit un abonnement. En variante, on peut envisager que ces règles RUL(U) soient fournies à d'autres moments, par exemple sur sollicitation de l'équipement utilisateur UE2 (suite à l'installation d'une nouvelle application, par exemple pour laquelle il ne dispose pas de règles), etc.

En outre, dans ces trois modes de réalisation, on a envisagé une configuration automatique de l'équipement utilisateur UE2 avec les règles fournies par l'entité 3 de gestion des règles, de façon transparente pour l'utilisateur U. Dans un quatrième mode de réalisation, on peut envisager que cette configuration soit mise en oeuvre par l'utilisateur U via une interface utilisateur de l'équipement utilisateur UE2, comme par exemple un menu de paramétrage disponible sur l'équipement utilisateur UE2 multi-SIM. A cet effet, l'équipement utilisateur UE2 dispose des identifiants de tranches de réseau auxquelles il a accès pour chaque réseau NWk pour lequel il dispose d'un identifiant unique IDk(U). L'utilisateur U, via l'interface utilisateur susmentionnée, peut alors définir les règles RUL(U) d'utilisation de ces différentes tranches pour tout ou partie des flux de chaque application installée sur son équipement utilisateur et configurer par ce biais l'équipement utilisateur pour qu'il utilise ces règles lorsqu'il accède à une application.

En variante, la configuration de l'équipement utilisateur peut être réalisée « en dur » dans le logiciel de l'équipement utilisateur en fonction de règles RUL(U) fournies par exemple par une entité externe telle que l'entité 3 de gestion des règles ou par l'utilisateur U.

## Revendications

1. Procédé de configuration d'un équipement utilisateur (UE2) destiné à être utilisé par un utilisateur (U) auquel est allouée une pluralité d'identifiants (ID1(U), ID2(U),...,IDK(U)), identifiant chacun de manière unique ledit utilisateur sur au moins un réseau de communications (NW1,...,NWK), ledit procédé étant mis en oeuvre par ledit équipement utilisateur et comprenant, pour au moins une application (Appj) :
- une étape d'obtention (F30) d'au moins une règle associant à au moins un flux de ladite application, au moins une tranche dudit au moins un réseau de communications pour un acheminement de données relatives audit au moins un flux et une information reliant ladite tranche à un identifiant parmi ladite pluralité d'identifiants de l'utilisateur ;
- une étape de configuration (F40) de l'équipement utilisateur avec ladite au moins une règle (RUL(U)/Appj) pour qu'il exécute (F60) ladite au moins une règle lors d'un accès à ladite application (F50).

2. Procédé de configuration selon la revendication 1 dans lequel ladite au moins une règle est obtenue lors d'une association (F20) de l'équipement utilisateur audit au moins un réseau de communications.

3. Procédé de configuration selon la revendication 1 ou 2 dans lequel ladite au moins une règle comprend une pluralité de tranches distinctes.

4. Procédé de configuration selon la revendication 3 dans lequel, dans ladite au moins une règle, une priorité d'utilisation est attribuée à chacune de ladite pluralité de tranches distinctes.

5. Procédé de configuration selon l'une quelconque des revendications 1 à 4 dans lequel les étapes d'obtention et de configuration de l'équipement utilisateur sont réalisées par l'intermédiaire d'une interface utilisateur disponible sur l'équipement utilisateur.

6. Procédé de gestion de règles, mis en oeuvre par une entité (3) de gestion de règles, ledit procédé comprenant, pour au moins un utilisateur (U) auquel est allouée une pluralité d'identifiants (ID1(U), ID2(U),...,IDK(U)) identifiant respectivement ledit utilisateur de manière unique sur au moins un réseau de communications (NW1,...,NWK) :
- une étape (E10) de détermination d'au moins une règle associant à au moins un flux d'une application, au moins une tranche dudit au moins un réseau de communications pour un acheminement de données relatives audit au moins un flux et une information reliant ladite tranche à un identifiant parmi ladite pluralité d'identifiants dudit utilisateur ; et
- une étape (E20) de transmission de ladite au moins une règle vers un équipement utilisateur dudit utilisateur.

7. Procédé de gestion de règles selon la revendication 6 comprenant en outre, une étape d'attribution, dans au moins une règle déterminée comprenant une pluralité de tranches dudit au moins un réseau de communications, d'une priorité d'utilisation à chaque tranche.

8. Procédé de gestion de règles selon la revendication 6 ou 7 dans lequel au moins une règle déterminée comprenant une pluralité de tranches dudit au moins un réseau de communications comprend une instruction de réaliser une répartition de charge sur ladite pluralité de tranches.

9. Procédé de gestion de règles selon l'une quelconque des revendications 6 à 8 dans lequel des règles associées à des flux d'applications différentes comprennent des priorités d'utilisation desdites règles.

10. Procédé selon l'une quelconque des revendications 1 à 9 dans lequel ladite au moins une information comprend, pour une tranche d'un réseau de communications :
- ledit identifiant parmi ladite pluralité d'identifiants de l'utilisateur ;
- un identifiant d'un module dudit équipement utilisateur contenant ledit identifiant ; ou
- un identifiant dudit réseau de communication pour lequel est alloué ledit identifiant audit utilisateur.

11. Procédé selon l'une quelconque des revendications 1 à 10 dans lequel ladite au moins une règle comprend un identifiant de ladite application.

12. Procédé selon l'une quelconque des revendications 1 à 11 dans lequel ladite application est une application installée sur ledit équipement utilisateur.

13. Procédé selon l'une quelconque des revendications 1 à 12 dans lequel au moins deux desdits identifiants alloués à l'utilisateur identifient ledit utilisateur sur deux réseaux de communication différents.

14. Procédé selon l'une quelconque des revendications 1 à 13 dans lequel au moins deux desdites identifiants alloués à l'utilisateur identifient ledit utilisateur sur un même réseau de communication.

15. Procédé selon l'une quelconque des revendications 1 à 14 dans lequel au moins une règle associe une pluralité de tranches correspondant à des réseaux de communications distincts à au moins un flux d'une application.

16. Equipement utilisateur (UE2) destiné à être utilisé par un utilisateur auquel est allouée une pluralité d'identifiants identifiant chacun de manière unique ledit utilisateur sur au moins un réseau de communications, ledit équipement utilisateur comprenant :
- un module d'obtention (2B), configuré pour obtenir au moins une règle associant à au moins un flux d'une application, au moins une tranche dudit au moins un réseau de communications pour un acheminement de données relatives audit au moins un flux et une information reliant ladite tranche à un identifiant parmi ladite pluralité d'identifiants de l'utilisateur ;
- un module d'exécution (2C), configuré pour exécuter ladite au moins une règle lors d'un accès à ladite application.

17. Equipement utilisateur (UE2) selon la revendication 16, configuré pour recevoir une pluralité de modules USIM (Universal Subscriber Identity Module) et/ou de cartes réseaux, chaque carte et/ou chaque module (USIM1,...,USIMK) étant associé(e) à un identifiant (ID1(U),...,IDK(U)) distinct parmi ladite pluralité d'identifiants.

18. Entité (3) de gestion de règles comprenant :
- un module (3A) de détermination, configuré pour déterminer au moins une règle associant à au moins un flux d'une application, au moins une tranche d'au moins un réseau de communications pour un acheminement de données relatives audit au moins un flux et une information reliant ladite tranche à un identifiant parmi une pluralité d'identifiants alloués audit utilisateur et identifiant respectivement ledit utilisateur de manière unique sur ledit au moins un réseau de communications ; et
- un module (3B) de transmission configuré pour transmettre ladite au moins une règle vers un équipement utilisateur dudit utilisateur.

19. Système (1) comprenant :
- au moins un équipement utilisateur (UE2) selon la revendication 16 ou 17, destiné à être utilisé par un utilisateur auquel est allouée une pluralité d'identifiants identifiant de manière unique ledit utilisateur sur au moins un réseau de communications ;
- une entité (3) de gestion des règles selon la revendication 18.

20. Système (1) selon la revendication 19 dans lequel :
- ledit au moins un réseau de communications comprend une pluralité de réseaux de communications (NW1,..,NWK) ;
- le module de transmission de ladite entité de gestion est configuré pour transmettre ladite au moins une règle à une entité (PCF1,...,PCFK) gérant ledit utilisateur dans chaque réseau de communications ; et
- chaque entité (PCF1,...,PCFK) gérant ledit utilisateur de chaque réseau de communications est configurée pour transmettre ladite au moins une règle audit équipement utilisateur lors d'une association dudit équipement utilisateur auprès de ce réseau de communications.

21. Système (1) selon la revendication 19 dans lequel ladite pluralité d'identifiants est allouée à l'utilisateur par un unique réseau de communications (NW1) et l'entité (3) de gestion des règles est une entité de cet unique réseau de communications.

## Patentansprüche

1. Verfahren zur Konfiguration einer Benutzereinrichtung (UE2), die dazu bestimmt ist, von einem Benutzer (U) verwendet zu werden, dem eine Vielzahl von Kennungen (ID1(U), ID2(U),...,IDK(U)) zugewiesen ist, die je den Benutzer auf mindestens einem Kommunikationsnetz (NW1,...NWK) eindeutig bezeichnen, wobei das Verfahren von der Benutzereinrichtung durchgeführt wird und für mindestens eine Anwendung (Appj) enthält:
- einen Schritt des Erhalts (F30) mindestens einer Regel, die mindestens einem Fluss der Anwendung mindestens einen Abschnitt des mindestens einen Kommunikationsnetzes für eine Weiterleitung von Daten betreffend den mindestens einen Fluss und eine Information zuordnet, die den Abschnitt mit einer Kennung unter der Vielzahl von Kennungen des Benutzers verbindet;
- einen Schritt der Konfiguration (F40) der Benutzereinrichtung mit der mindestens einen Regel (RUL(U)/Appj), damit sie die mindestens eine Regel bei einem Zugriff auf die Anwendung (F50) ausführt (F60).

2. Konfigurationsverfahren nach Anspruch ,1 wobei die mindestens eine Regel bei einer Zuordnung (F20) der Benutzereinrichtung zum mindestens einen Kommunikationsnetz erhalten wird.

3. Konfigurationsverfahren nach Anspruch 1 oder 2, wobei die mindestens eine Regel eine Vielzahl von unterschiedlichen Abschnitten enthält.

4. Konfigurationsverfahren nach Anspruch 3, wobei, in der mindestens einen Regel, eine Benutzungspriorität jedem der Vielzahl von unterschiedlichen Abschnitten zugeteilt wird.

5. Konfigurationsverfahren nach einem der Ansprüche 1 bis 4, wobei die Schritte des Erhalts und der Konfiguration der Benutzereinrichtung mittels einer Benutzerschnittstelle durchgeführt werden, die auf der Benutzereinrichtung zur Verfügung steht.

6. Regelverwaltungsverfahren, durchgeführt von einer Regelverwaltungseinheit (3), wobei das Verfahren für mindestens einen Benutzer (U), dem eine Vielzahl von Kennungen (ID1(U), ID2(U), ... ,IDK(U)) zugewiesen ist, die den Benutzer auf mindestens einem Kommunikationsnetz (NW1, ... ,NWK) eindeutig bezeichnen, enthält:
- einen Schritt (E10) der Bestimmung mindestens einer Regel, die mindestens einem Fluss einer Anwendung mindestens einen Abschnitt des mindestens einen Kommunikationsnetzes für eine Weiterleitung von Daten betreffend den mindestens einen Fluss und eine Information zuordnet, die den Abschnitt mit einer Kennung unter der Vielzahl von Kennungen des Benutzers verbindet; und
- einen Schritt (E20) der Übertragung der mindestens eine Regel an eine Benutzereinrichtung des Benutzers.

7. Regelverwaltungsverfahren nach Anspruch 6, das außerdem einen Schritt der Zuteilung, in mindestens einer bestimmten Regel, die eine Vielzahl von Abschnitten des mindestens einen Kommunikationsnetzes enthält, einer Benutzungspriorität zu jedem Abschnitt enthält.

8. Regelverwaltungsverfahren nach Anspruch 6 oder 7, wobei mindestens eine bestimmte Regel, die eine Vielzahl von Abschnitten des mindestens einen Kommunikationsnetzes enthält, eine Anweisung enthält, eine Lastverteilung auf der Vielzahl von Abschnitten durchzuführen.

9. Regelverwaltungsverfahren nach einem der Ansprüche 6 bis 8, wobei Flüssen unterschiedlicher Anwendungen zugeordnete Regeln Benutzungsprioritäten der Regeln enthalten.

10. Verfahren nach einem der Ansprüche 1 bis 9, wobei die mindestens eine Information für einen Abschnitt eines Kommunikationsnetzes enthält:
- die Kennung unter der Vielzahl von Kennungen des Benutzers;
- eine Kennung eines Moduls der Benutzereinrichtung, das die Kennung enthält; oder
- eine Kennung des Kommunikationsnetzes, für das die Kennung dem Benutzer zugewiesen ist.

11. Verfahren nach einem der Ansprüche 1 bis 10, wobei die mindestens eine Regel eine Kennung der Anwendung enthält.

12. Verfahren nach einem der Ansprüche 1 bis 11, wobei die Anwendung eine auf der Benutzereinrichtung installierte Anwendung ist.

13. Verfahren nach einem der Ansprüche 1 bis 12, wobei mindestens zwei der dem Benutzer zugewiesenen Kennungen den Benutzer auf zwei unterschiedlichen Kommunikationsnetzen bezeichnen.

14. Verfahren nach einem der Ansprüche 1 bis 13, wobei mindestens zwei der dem Benutzer zugewiesenen Kennungen den Benutzer auf einem gleichen Kommunikationsnetz bezeichnen.

15. Verfahren nach einem der Ansprüche 1 bis 14, wobei mindestens eine Regel eine Vielzahl von Abschnitten entsprechend verschiedenen Kommunikationsnetzen mindestens einem Fluss einer Anwendung zuordnet.

16. Benutzereinrichtung (UE2), die dazu bestimmt ist, von einem Benutzer verwendet zu werden, dem eine Vielzahl von Kennungen zugewiesen ist, die den Benutzer jeweils auf mindestens einem Kommunikationsnetz eindeutig bezeichnen, wobei die Benutzereinrichtung enthält:
- ein Erhaltsmodul (2B), das konfiguriert ist, mindestens eine Regel zu erhalten, die mindestens einem Fluss einer Anwendung mindestens einen Abschnitt des mindestens einen Kommunikationsnetzes für eine Weiterleitung von Daten betreffend den mindestens einen Fluss und eine Information zuordnet, die den Abschnitt mit einer Kennung unter der Vielzahl von Kennungen des Benutzers verbindet;
- ein Ausführungsmodul (2C), das konfiguriert ist, die mindestens eine Regel bei einem Zugriff auf die Anwendung auszuführen.

17. Benutzereinrichtung (UE2) nach Anspruch 16, die konfiguriert ist, eine Vielzahl von USIM-Modulen (Universal Subscriber Identity Module) und/oder von Netzkarten zu empfangen, wobei jede Karte und/oder jedes Modul (USIM1, ... ,USIMK) einer verschiedenen Kennung (ID1(U)...,IDK(U)) unter der Vielzahl von Kennungen zugeordnet ist.

18. Regelverwaltungseinheit (3), die enthält:
- ein Bestimmungsmodul (3A), das konfiguriert ist, mindestens eine Regel zu bestimmen, die mindestens einem Fluss einer Anwendung mindestens einen Abschnitt mindestens eines Kommunikationsnetzes für eine Weiterleitung von Daten betreffend den mindestens einen Fluss und eine Information zuordnet, die den Abschnitt mit einer Kennung unter einer Vielzahl von Kennungen verbindet, die dem Benutzer zugewiesen sind und die den Benutzer auf dem mindestens einen Kommunikationsnetz eindeutig bezeichnen; und
- ein Übertragungsmodul (3B), das konfiguriert ist, die mindestens eine Regel an eine Benutzereinrichtung des Benutzers zu übertragen.

19. System (1), das enthält:
- mindestens eine Benutzereinrichtung (UE2) nach Anspruch 16 oder 17, die dazu bestimmt ist, von einem Benutzer benutzt zu werden, dem eine Vielzahl von Kennungen zugewiesen ist, die den Benutzer auf mindestens einem Kommunikationsnetz eindeutig bezeichnen;
- eine Regelverwaltungseinheit (3) nach Anspruch 18.

20. System (1) nach Anspruch 19, wobei:
- das mindestens eine Kommunikationsnetz eine Vielzahl von Kommunikationsnetzen (NW1, .. ,NWK) enthält;
- das Übertragungsmodul der Verwaltungseinheit konfiguriert ist, die mindestens eine Regel an eine Einheit (PCF1,... ,PCFK) zu übertragen, die den Benutzer in jedem Kommunikationsnetz verwaltet; und
- jede den Benutzer jedes Kommunikationsnetzes verwaltende Einheit (PCF1,...,PCFK) konfiguriert ist, bei einer Zuordnung der Benutzereinrichtung zu diesem Kommunikationsnetz die mindestens eine Regel an die Benutzereinrichtung zu übertragen.

21. System (1) nach Anspruch 19, wobei die Vielzahl von Kennungen dem Benutzer von einem einzigen Kommunikationsnetz (NW1) zugewiesen wird, und die Regelverwaltungseinheit (3) eine Einheit dieses einzigen Kommunikationsnetzes ist.

## Claims

1. Method for configuring a user equipment (UE2) intended to be used by a user (U), to whom a plurality of identifiers (ID1(U), ID2(U), ..., IDK(U)) is allocated, each uniquely identifying said user on at least one communications network (NW1, ... , NWK), said method being implemented by said user equipment and comprising, for at least one application (Appj):
- a step (F30) of acquiring at least one rule associating, with at least one flow of said application, at least one slice of said at least one communications network for routing data relating to said at least one flow and information connecting said slice to an identifier from among said plurality of identifiers of the user;
- a step (F40) of configuring the user equipment with said at least one rule (RUL(U)/Appj) so that it executes (F60) said at least one rule when accessing (F50) said application.

2. Configuration method according to Claim 1, wherein said at least one rule is acquired when associating (F20) the user equipment with said at least one communications network.

3. Configuration method according to Claim 1 or 2, wherein said at least one rule comprises a plurality of separate slices.

4. Configuration method according to Claim 3, wherein, in said at least one rule, a usage priority is assigned to each of said plurality of separate slices.

5. Configuration method according to any one of Claims 1 to 4, wherein the steps of acquiring and of configuring the user equipment are carried out by means of a user interface available on the user equipment.

6. Method for managing rules, implemented by a rule management entity (3), said method comprising, for at least one user (U), to whom a plurality of identifiers (ID1(U), ID2(U), ..., IDK(U)) is allocated, respectively uniquely identifying said user on at least one communications network (NW1, ..., NWK):
- a step (E10) of determining at least one rule associating, with at least one flow of an application, at least one slice of said at least one communications network for routing data relating to said at least one flow and information connecting said slice to an identifier from among said plurality of identifiers of said user; and
- a step (E20) of transmitting said at least one rule to a user equipment of said user.

7. Rule management method according to Claim 6, further comprising a step of assigning, in at least one determined rule comprising a plurality of slices of said at least one communications network, a usage priority to each slice.

8. Rule management method according to Claim 6 or 7, wherein at least one determined rule comprising a plurality of slices of said at least one communications network comprises an instruction for distributing a load over said plurality of slices.

9. Rule management method according to any one of Claims 6 to 8, wherein rules associated with flows of various applications comprise usage priorities for said rules.

10. Method according to any one of Claims 1 to 9, wherein said minimum information comprises, for a slice of a communications network:
- said identifier from among said plurality of identifiers of the user;
- an identifier of a module of said user equipment containing said identifier; or
- an identifier of said communication network, for which said identifier is allocated to said user.

11. Method according to any one of Claims 1 to 10, wherein said at least one rule comprises an identifier of said application.

12. Method according to any one of Claims 1 to 11, wherein said application is an application installed on said user equipment.

13. Method according to any one of Claims 1 to 12, wherein at least two of said identifiers allocated to the user identify said user on two different communication networks.

14. Method according to any one of Claims 1 to 13, wherein at least two of said identifiers allocated to the user identify said user on the same communication network.

15. Method according to any one of Claims 1 to 14, wherein at least one rule associates a plurality of slices corresponding to separate communications networks with at least one flow of an application.

16. User equipment (UE2) intended to be used by a user, to whom a plurality of identifiers is allocated, each uniquely identifying said user on at least one communications network, said user equipment comprising:
- an acquisition module (2B), configured to acquire at least one rule associating, with at least one flow of an application, at least one slice of said at least one communications network for routing data relating to said at least one flow and information connecting said slice to an identifier from among said plurality of identifiers of the user;
- an execution module (2C), configured to execute said at least one rule when accessing said application.

17. User equipment (UE2) according to Claim 16, configured to receive a plurality of USIMs (Universal Subscriber Identity Modules) and/or network cards, each card and/or each module (USIM1, ..., USIMK) being associated with a separate identifier (ID1(U), ..., IDK(U)) from among said plurality of identifiers.

18. Rule management entity (3) comprising:
- a determination module (3A), configured to determine at least one rule associating, with at least one flow of an application, at least one slice of at least one communications network for routing data relating to said at least one flow and information connecting said slice to an identifier from among a plurality of identifiers allocated to said user and respectively uniquely identifying said user on said at least one communications network; and
- a transmission module (3B), configured to transmit said at least one rule to a user equipment of said user.

19. System (1) comprising:
- at least one user equipment (UE2) according to Claim 16 or 17, intended to be used by a user, to whom a plurality of identifiers is allocated uniquely identifying said user on at least one communications network;
- a rule management entity (3) according to Claim 18.

20. System (1) according to Claim 19, wherein:
- said at least one communications network comprises a plurality of communications networks (NW1, ..., NWK);
- the transmission module of said management entity is configured to transmit said at least one rule to an entity (PCF1, ..., PCFK) managing said user in each communications network; and
- each entity (PCF1, ..., PCFK) managing said user of each communications network is configured to transmit said at least one rule to said user equipment when associating said user equipment with this communications network.

21. System (1) according to Claim 19, wherein said plurality of identifiers is allocated to the user by a single communications network (NW1) and the rule management entity (3) is an entity of this single communications network.
